# EUROPEAN PATENT APPLICATION

(11) **EP 1 246 112 A1**
(43) Date of publication of application: **02.10.2002**
(21) Application number: 02252371.6
(22) Date of filing: 02.04.2002
(51) Int. Cl.: G06F 17/60

(54) **Request for quote (RFQ) and inside markets**

(30) Priority: 30.03.2001 US 280692 P
(71) Applicant: eSpeed, Inc., New York, NY 10171 (US)
(72) Inventor: Gilbert, Andrew C., Califon, New Jersey 07830 (US); Kirwin, Glann D., Scarsdale, New York 10583 (US); Tselepis, William P., Jr., New Providence, New Jersey 07974 (US); Lutnick, Howard W., Penthouse B, New York 10021 (US); Jones, Timorthy D., Morristown, New Jersey 07960 (US)
(74) Representative: Jones, David Colin

(57) **Abstract**

Systems and methods for rule-based bilateral negotiation of quotes in response to request for quotes (RFQ) and inside market inquiries is provided. A trader is provided with a user-interactive trading interface for submitting and receiving an RFQ. The user-interactive trading interface may provide a requesting trader with an opportunity to generate requests or inquires pertaining to a desired instrument in a particular market (e.g., a bond market). The RFQ may be forwarded to a select group of market participants, determined automatically or by the requesting trader. The market participant may respond to the RFQ with a quote via the user-interactive trading interface. A rule-based negotiation session may be initialized upon receiving the quote from the market participant.

## Description

### Cross Reference to Related Application

This application claims the benefit of United states Provisional Patent Application No. 60/280,692, filed March 30, 2001, which is hereby incorporated by reference herein in its entirety.

### Field of the Invention

The present invention is systems and methods for bilateral off-market trading. More particularly, the present invention relates to systems and methods for rule-based bilateral negotiation of quotes in response to request for quotes.

### Background of the Invention

In financial and commodities transactions, buyers and sellers may negotiate a final price. Absent the opportunity to negotiate a final price, buyers and sellers may seek other potential buyers and sellers to execute desired trading transactions.

Historically, the negotiation process between buyers and sellers has been conducted through telephone conversations, either directly or through an intermediary party (e.g., a broker). Due to the inefficiency and high probability of error in such a negotiation process, there exists a need in the market to support electronic interaction of buyers and sellers that emulates a voice request for a final price.

Today, buyers and sellers may engage in financial and commodities transactions through the use of electronic trading systems. An electronic trading system provides buyers and sellers with an opportunity to create an exchange-like environment where a bid and/or an offer for an instrument can be posted electronically (e.g., using a computer interface) and revealed to all market participants. However, current electronic trading systems fail to provide buyers and sellers with a reliable means for negotiating a price.

E-mail and instantaneous messaging systems may provide buyers and sellers with an opportunity to converse and possibly negotiate a final price. Yet, these systems fail to provide rules to regulate such transactions. Rules are deemed necessary to enforce transactions conducted between buyers and sellers in various marketplaces.

In view of the foregoing, it would be desirable to provide a user-interactive trading interface configured to administer rule-based negotiation of trading transactions in various marketplaces.

### Summary of the Invention

It is an object of this invention to provide systems and methods for administering rule-based negotiation of trading transactions in various marketplaces.

In accordance with this and other objects of the invention, a user-interactive trading interface may be configured to provide a requesting trader with an opportunity to submit and monitor a request for quote (RFQ). An RFQ may be constructed for any instrument in a particular market. The requesting trader may specify a select group of market participants to receive the RFQ.

The market participant, upon receiving the RFQ from the requesting trader, may elect to respond to the RFQ with a quote or ignore the request. A negotiation session may be initiated when the market participant submits a quote in response to the RFQ. When the requesting trader receives a quote in response to their posted RFQ, the requesting trader may exercise various options. The requesting trader may elect to accept the quote, reject the quote without offering a counter-quote, or reject the quote and offer a counter-quote.

The negotiation session may be rule-based. Different markets (e.g., a bond market) may exercise different sets of rules. The rules associated with a particular market, in which the RFQ for an instrument is being transacted, may regulate the negotiation process between the requesting trader and market participant. Regulation of the negotiation process may help to deter unfair negotiation. Furthermore, unfair negotiation practiced by either a requesting trader or a market participant may be subject to a penalty.

As will be apparent upon reading the Detailed Description of the Preferred Embodiments, various features of the present invention may be implemented with any type of messaging interface for executing RFQ and inside market inquiries.

### Brief Description of the Drawings

Further features of the invention, its nature and numerous advantages will be more apparent from the following detailed description of the preferred embodiments, taken in conjunction with the accompanying drawings, in which like reference characters refer to like parts throughout, and in which:

FIG. 1 is a block diagram of a system that may be used to implement the processes and functions illustrated in FIGS. 2-8 and FIGS. 9A-9E in accordance with certain embodiments of the present invention;

FIG. 2 is an illustrative user-interactive trading interface window in accordance with certain embodiments of the present invention;

FIG. 3 is an illustrative request for quote options menu in accordance with certain embodiments of the present invention;

FIG. 4 is an illustrative user-interactive trading interface when initiating a request for quote in accordance with certain embodiments of the present invention;

FIG. 5 is an illustrative order entry dialog box in accordance with certain embodiments of the present invention;

FIG. 6 is an illustrative RFQ notification window in accordance with certain embodiments of the present invention;

FIG. 7 is an illustrative RFQ quote window in accordance with certain embodiments of the present invention;

FIG. 8 is an illustrative quote accept/reject window in accordance with certain embodiments of the present invention; and

FIGS. 9A-9E are flow diagrams for negotiating a quote in response to an RFQ in accordance with certain embodiments of the present invention.

### Detailed Description of the Preferred Embodiments

The present invention provides a user-interactive trading interface integrated with a request for quote (hereinafter "RFQ") functionality.

The RFQ functionality may provide a requesting trader with an opportunity to communicate with market participants to request and negotiate off-market quotes for a desired instrument. A requesting trader is a buyer and/or a seller who initiates a transaction by sending out a request for a quote or inquiry. A market participant is a buyer and/or a seller who responds with a quote to an initial request or inquiry posted by a requesting trader.

A request in the form of an RFQ may embody a description of the instrument for which a requesting trader is seeking a price and size. Trade attributes, other than price and size, may also be requested by the requesting trader and further negotiated by the market participants. An additional attribute may be a strike price of an option (i.e., an underlying value of a derived instrument). This attribute may be provided for a contingent purchase (i.e., a purchase contingent upon the price of another security, instrument, or item). For example, an RFQ may be posted for a bond option contingent upon the bond price being a certain value. As another example, a buyer of a travel package may pay a certain price (e.g., a price value of "X") for a plane ticket contingent upon a hotel price being no more than a certain price (e.g., a price value no greater than "Y"). Another attribute may address collateral for a loan. For example, a loan may be provided at a certain rate based on collateral provided by a buyer. However, more valuable collateral provided by the buyer may demand a different rate for the loan. Trade attributes are not limited to those described above. Any applicable attribute may be incorporated into the RFQ functionality for the purposes of allowing a requesting trader and a market participant to negotiate a trade.

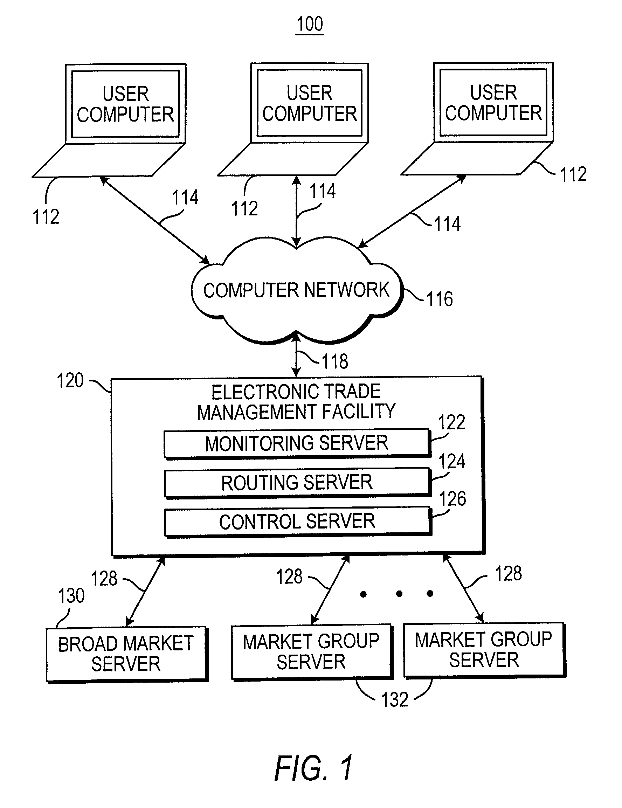

An illustrative system 100 for posting and responding to an RFQ, an inside market inquiry, or any other suitable trade-related transaction is shown in FIG. 1. System 100 may incorporate one or more user computers 112. User computers 112 may provide a user-interactive trading interface configured with the RFQ functionality. The RFQ capable trading interface provides the requesting trader and the market participant with the ability to construct and submit an RFQ, receive an RFQ, construct and submit a quote in response to an RFQ, participate in a negotiation session pertaining to an RFQ, monitor activity for an RFQ, perform any other trade-applicable activities, or a combination thereof.

RFQ transactions conducted on user computer 112 may be transmitted to a computer network 116 via communication links 114. Computer network 116 may then transmit the RFQ transactions to an electronic trade management facility 120 via communication link 118. Facility 120 may initially receive an RFQ before it is transmitted to any market participants. Management facility may include monitoring server 122, control server 124, and routing server 126.

Monitoring server 122 may be used to determine the rules associated with an RFQ being transacted on a specific market (e.g., a bond market). In addition, monitoring server 122 may be responsible for enforcing penalties in response to an RFQ transaction not abiding by the rules of the specific market. For example, if a requesting trader rejects a market participant's quote for more size on a specific instrument after having made the request, the illegal rejection may be detected by monitoring server 122 and a penalty may be invoked against the requesting trader.

Multiple rules may be applied to an RFQ for a particular instrument based on the type of market in which the instrument is being traded. Various RFQ rules may be constructed to accommodate any marketplace. RFQ rules may be constructed for any one of the following categories: direction of trade (e.g. a one-way or two-way RFQ), initial price submission, intermediary party involvement, filtering and sorting of quotes, market participant quoting (e.g., a best quote basis or a multiple quote basis), quote availability (e.g., a requesting trader can see all quoted prices entered against their request, but the market participant can only see their quote), trade notifications, bid/offer liquidity spread (BOLS), minimum size specification, inverted markets, request/quote ratio penalties, request/quote time limits, other applicable rules, or a combination thereof.

Routing server 124 may enforce and regulate routing protocols associated with an RFQ. The routing protocols may identify where the RFQ is to be transmitted. The RFQ may be transmitted to all market participants, a select group of market participants, to a single market participant, or a combination thereof. Routing server 124 may be configured to identify all requesting traders' and market participants' connections and their corresponding addresses in order to enable direct messaging and/or permissions to any individual or group. If the RFQ is intended for all the market participants, for example, management facility 120 may forward the RFQ to broad market server 130. However, if the RFQ is intended for a select group of market participants, management facility 120 may forward the RFQ to the applicable market group servers 132. The RFQ may be transmitted to broad market server 130 and market group servers 132 via communication links 128.

Routing protocols for distributing an RFQ may be user-defined and/or based on grouping through permissions. In a user-defined distribution, the requesting trader may identify which market participants should receive the RPQ. The mechanism by which the requesting trader may identify market participants may be as simple as selecting specific individuals, company names, or any other market grouping to receive the RFQ. However, the mechanism may be a more complex server process wherein various criteria is provided and routing server 124 sorts through all available market participants to determine a select group of market participants to receive the RPQ.

Criteria may be defined by a requesting trader and may comprise any one of the following categories: credit status, market status, company type, company department, location, any other group affiliation, or a combination thereof. The credit status criteria may determine whether a market participant has good or bad credit. The market status criteria may identify whether a market participant is a dealer, a customer's trader, a liquidity provider, or any other applicable status label. The company type criteria may identify whether a market participant is an individual, a manufacturer, a distributor, a consolidator, or any other applicable company type label. The company department criteria may identify select individuals or groups within the company. The location criteria may identify a city, a state, a region, or any other applicable location. The invention is not limited to the aforementioned criteria. Additional criteria for determining a select individual or group of market participants to receive the RFQ may be considered.

Distribution instructions may be based on grouping through permissions. Distribution of an RFQ may be regulated by controlling access to marketplaces. Marketplaces may include groups of market participants authorized to trade specific instruments. Routing server 124 in combination with an authorization manager, a group of processes, and/or a database that controls access may permit the RFQ to exist in an unlimited number of marketplaces. For example, market participants with permission only to trade in energy markets may be permitted to receive an RFQ for other instruments (e.g., bonds).

Grouping of market participants may also be permitted for a private session. In this case market participants may be grouped in a marketplace where requests and quotes can be shared only among the grouped market participants. Furthermore, submarket grouping may be permitted within the grouped market participants. Permissions in the submarket may restrict communications between any individual market participant or groups of market participants. Such permissions may, for example, facilitate markets in which both broker dealers and institutional buyers exist simultaneously.

Filtering of RFQ messages may be regulated by routing server 124 to determine if an RFQ is to be distributed to a market participant. The filtering process may be server based (e.g., implemented on routing server 124) or configured by a trader on the user-interactive trading interface. Filters implemented on routing server 124 may operate according to a set of rules. For example, the above-mentioned credit status criteria may be implemented on the server level, having a set of rules associated with determining market participants with good and bad credit. Another filter that may be implemented on the server level may be a trader authorization filter. If a requesting trader, for example, issues an RFQ to be delivered to a particular market participant and the market participant is not permitted to receive the RFQ, routing server 124 may not distribute that RFQ to the market participant. Filtering configured through the user-interactive trading interface, however, may not necessarily prevent an RFQ from being distributed to a market participant. Rather filtering implemented on the trading interface may limit which RPQ may be displayed to the market participant.

Control server 126 may manage and regulate the negotiation process between a requesting trader and a market participant. After the requesting trader submits an RFQ for an instrument, the RFQ is posted to a select group of market participants. When a market participant responds to the RFQ with a quote, the requesting trader and the market participant may enter a negotiation stage. Control server 126 may work in conjunction with monitoring server 122 to apply and enforce penalties during a negotiation session.

Monitoring server 122, control server 124, routing server 126, broad market server 120, and market group servers 124 may be any suitable servers, processors, computers, or data processing devices, or a combination of the same. Computer network 116 may be any suitable computer network including the Internet, an Intranet, a wide-area network (WAN), a local-area network (LAN), a wireless network, a digital subscriber line (DSL) network, a frame relay network, an asynchronous transfer mode (ATM) network, a virtual private network (VPN), or any combination of any of the same.

Communication links 114, 118, and 128 may be any suitable communication links. Such suitable communication links may be network links, dial-up links, wireless links, hard-wired links, etc. user computers 112 may be any suitable computers, processors, computer terminals, displays, portable computers, personal digital assistants, or any other suitable data processing devices, or combinations of the same.

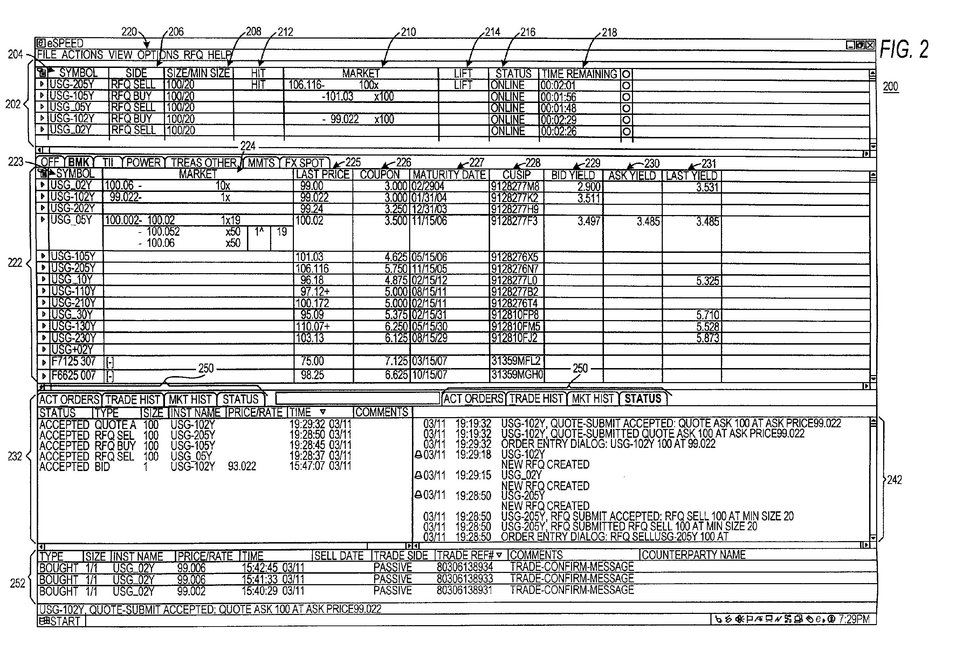

FIGS. 2-8 are illustrative examples of display screens that may be presented in certain embodiments of the present invention. It should be noted that the display screens presented here are only for illustrative purposes and various features, within the scope of the invention, may be added to or removed from the display screens. Furthermore, for the purpose of clarity, and not by way of limitation, the displays, techniques, and methods herein are demonstrated primarily in the context of request for quotes for financial instruments. However, any applicable instrument or trading transaction may be incorporated in the present invention.

A dedicated messaging area for posting an RFQ may be integrated into the user-interactive trading interface. FIG. 2 illustrates one embodiment of user-interactive trading interface window 200 for submitting an RFQ. Trading interface window 200 may include RFQ trading grid 202, instrument grid 222, trader information grids 232 and 242, and confirmation grid 252. A trader (i.e., a requesting trader or a market participant) may add or remove any number of grids from trading interface window 200.

RFQ trading grid 202 is preferably located at the top of window 200. However, RFQ trading grid 202 may be detached and relocated to any desired position on the trading interface. RFQ trading grid 202 may be configured to display "Symbol" field 204, "Side" field 206, "Size/Min Size" field 208, "Hit" field 210, "Market" field 212, "Lift" field 214, "Status" field 216, and "Time Remaining" field 218. Field 204 may inform a trader that an RFQ is posted for a specific financial instrument. For example, "usg_05y" may be listed in field 204 to inform a trader that an RFQ for a 5 year U.S. Treasury bond has been posted.

Field 206 may provide the direction of trade for a corresponding financial instrument designated in field 204. In a one-way RFQ market a requesting trader may designate whether he or she is a buyer or a seller. For example, if "RFQ BUY" is listed in field 206, a requesting trader has posted an RFQ for a financial instrument in which he or she is interested in buying. In a two-way RFQ market, a requesting trader may elect not to specify a direction of trade. In this type of RFQ market the requesting trader may receive a bid price and an offer price for a financial instrument.

Field 208 may provide the size being requested for a corresponding financial instrument designated in field 204. Field 208 may display, for example, "100/20". These two values indicate that the requesting trader is seeking to buy or sell (dependent on the direction of trade designated in field 206) 100 million USD (U.S. Dollars) worth of the financial instrument designated in field 204, with a minimum no less than 20 million USD worth.

A requesting trader may exercise a hidden size RFQ. In a hidden size RFQ, the requesting trader may elect not to provide either a price and/or size for an instrument. For example, "0/0" may be displayed in field 208. Upon a market participant responding to the RFQ, price and size can be bilaterally negotiated between the parties. Exercising a hidden size RFQ may useful in assisting quotation in illiquid markets, where revelation of a large transaction may dramatically influence price.

Field 210 may provide market activity between a requesting trader and a market participant for a corresponding financial instrument designated in field 204. Field 210 may display a bid price (or an offer price) and the associated size at that price quoted by the market participant. For example, if a requesting trader wishes to sell a particular financial instrument and submits an RFQ for that instrument, field 210 may display a bid price and size from a market participant in response to the requesting trader's REQ.

Fields 212 and 214 may be populated with a "Hit" indicator and "Lift" indicator, respectively. When a bid price provided by a market participant, in response to an RFQ, is accepted by the requesting trader, field 212 may be populated with a "Hit" indicator. When an offer price provided by a market participant, in response to an RFQ, is accepted by the requesting trader, field 214 may be populated with a "Lift" indicator.

Field 216 may provide the status of a requesting trader associated with a financial instrument designated in field 204. Field 216 may indicate whether the requesting trader is currently "Online", "Offline", has "Cancelled", has "Traded", or any other appropriate status designation.

Field 218 may provide the time remaining for a market participant to respond to an RFQ with a quote. The time value provided in field 218 may be a default value for the type of instrument defined in field 204 or a user-defined value, Upon expiration of the time in field 218, the RFQ may be automatically retracted to prohibit market participants from placing a quote. When the time in field 218 has expired, RFQ trading grid 202 may be configured to shade the inactive RFQ. After a period of time, the inactive RFQ may be removed from RFQ trading grid 202.

RFQ trading grid 202 may receive all RFQs for a particular market subscribed to by a trader. A trader subscribed to the bond market, for example, may be able to receive every RFQ posted for bond instruments. However, the rules assigned for the bond market may prohibit the market participant from viewing RFQ data while permitting the requesting trader to view all RFQ data. The reverse may also hold true. Rules assigned for a particular market may dictate what traders can view in RFQ trading grid 202.

Since RFQ trading grid 202 may display RFQ activity for all requesting traders subscribing to the particular market, the RFQ data being displayed on grid 202 may be sorted by various font colors and/or backgrounds. Sorting the RFQ data by using a different color font may allow a requesting trader to identify his or her RFQ data from other requesting traders. For example, a requesting trader's RFQ may be represented by a blue color font while all other requesting traders' RFQ may be represented by a yellow color font.

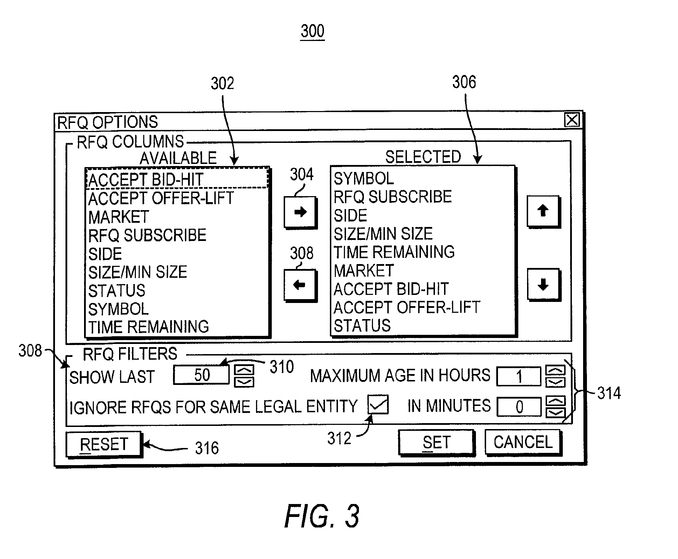

RFQ fields may be added or removed from RFQ trading grid 202 via trading grid options 220. Options 220 may provide a trader with a menu for configuring RFQ trading grid 202. FIG. 3 shows one embodiment of RFQ options menu 300. Menu 300 may provide list 302 of available RFQ fields. The trader may use button 304 to add RFQ fields selected in list 302 to list 306. List 306 displays the selected RFQ fields to be displayed in RFQ trading grid 202 of FIG. 2. The trader may remove RFQ fields from list 306 by using button 308.

In addition, menu 300 may provide RFQ filters field 308. Field 308 may include show last option 310, legal entity option 312, and age option 314. Option 310 may provide a trader with an opportunity to designate how many of the most recent RFQs should be displayed in grid 202 of FIG. 2. Option 312, when selected, may block duplicate RFQs from being posted on grid 202 originating from the same market participant. Option 314 may provide a trader with an opportunity to assign how long an RFF should be displayed in grid 202. For example, a user may desire that an RFQ be displayed in his or her grid 202 for no more than 1 hour. After the one hour has expired, the RFQ, whether active or not active, may be removed from grid 202.

Instrument grid 222 may provide a trader with a list of available instruments in which he or she is authorized to trade. The trader may be authorized to trade in a particular market if the trader subscribes to that market. A requesting trader subscribing to the electricity market may, for example, submit an RFQ for an electric instrument. Similarly, a market participant subscribing to the electricity market may receive an RFQ for an electric instrument from a requesting trader. However, the distribution of an RFQ is not limited to subscribing traders. An RFQ may be distributed to all authorized participants whether they are subscribers at the time or not. This type of distribution may be configured at the marketplace level.

Instrument grid 222 may be configured to provide symbol field 223, market field 224, last price field 225, coupon field 226, maturity date field 227, CUSIP identification field 228, bid yield field 229, ask yield field 230, and last yield field 231. Fields may be added or removed from instrument grid 222 depending on the type of market a trader displaying on instrument grid 222. Fields may also be added or removed according to a trader's preference. Any field applicable to the trading of any instrument may be provided in grid 222.

Trader information grids 232 and 242 may provide information pertaining only to a trader's RFQ and quote activity in a particular market, not all RFQ activity in the particular market (as shown in RPQ trading grid 202 of FIG. 2). Interface window 200 may be configured with trader information grid 232 for displaying the trader's active orders. Interface window 200 may also be configured with another trader information grid 242 for displaying real-time activity between the trader and a responding trader. Any number of trader information grids may be incorporated in interface window 200.

Tabs 250 provided on trader information grids 232 and 242 provide the trader with an opportunity to quickly switch the type of information being displayed on information grids 232 and 242. For example, tabs 250 may provide a trader with an opportunity to view his or her trade history. In addition, tabs 250 may provide the trader with an opportunity to view market history for the specific market (e.g., a bond market) being accessed in instrument grid 222.

Confirmation grid 252 may provide a trader with trade verification information. Confirmation grid 252 may provide information, such as, instrument name, whether the instrument was bought or sold, size of the instrument that was bought or sold, price the instrument was bought or sold at, time and date the trade took place, trade side, trade reference number, comments pertaining to trade, any other trade verification applicable information, or a combination thereof.

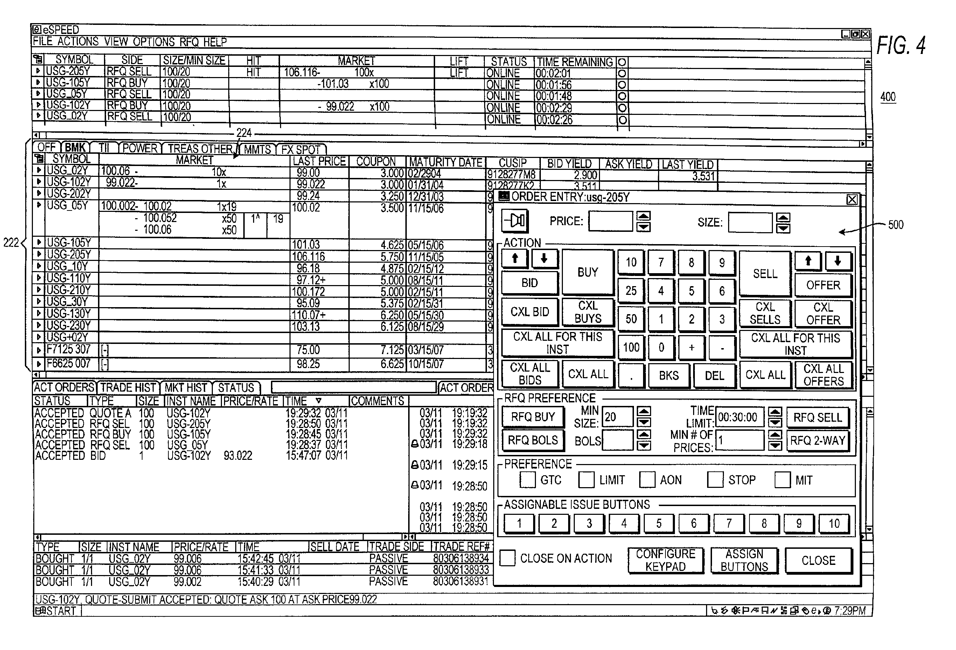

Trading interface window 400 of FIG. 4 illustrates how a requesting trader may initiate an RFQ. The requesting trader may submit an RFQ for an instrument by first selecting the desired instrument from instrument grid 222. The trader may, for example, use a pointing device and double-click on the market cell corresponding to the desired instrument under market field 224. When the trader selects the desired instrument, order entry dialog box (hereinafter "OEDB") 500 may be provided as an overlay display on trading interface window 400.

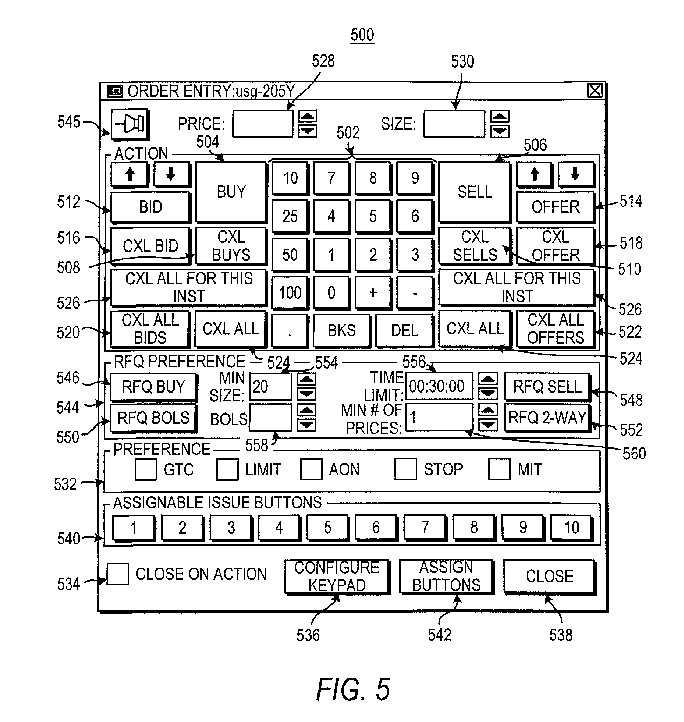

FIG. 5 illustrates one embodiment of OEDB 500 for submitting an REQ. OEDB 500 may provide the requesting trader with various options and entry fields. Using some of these options and entry fields, a trader may submit non-RFQ trade commands (i.e., standard trading commands), such as, a bid command, an offer command, a buy command, or a sell command for any instrument selected from instrument grid 222 of FIG. 4. When OEDB 500 is activated, the fields in OEDB 500 are preferably populated with information pertaining to the instrument selected from instrument grid 222. For example, the current market price for the instrument may populate the price field.

Numeric keypad 502 may be located at the center of OEDB 500. Numeric keypad 502 may provide buttons for numbers zero through nine, and may contain buttons for numbers ten, twenty-five, fifty, and one hundred or any other suitable or desirable values. The numeric keypad may also contain a plus button ("+"), a minus button ("-"), a decimal point button ("."), a backspace button ("BKS"), and a delete button ("DEL").

OEDB 500 may provide a trader with buy option 504, sell option 506, cancel buys option 508, cancel sells option 510, bid option 512, offer option 514, cancel bids option 516, cancel offers option 518, cancel all bids option 520 cancel all offers option 522, cancel all option 524, cancel all for all instruments option 526, price entry field 528, and size entry field 530.

OEDB 500 may provide an RFQ preference field 544. RFQ preferences field 544 may be made available when the requesting trader selects RFQ option 545 from OEDB 500. Likewise, RFQ preferences field 544 may be removed from OEDB 500 when RFQ option 545 is selected again. Field 544 may provide a trader with RFQ buy option 546, RFQ sell option 548, RFQ BOLS option 550, and RFQ 2-way option 552. RFQ buy option 546 and RFQ sell option 548 provide the requesting trader with the ability to submit an RFQ from a buyer position and an RFQ from a seller position, respectively. Option 550 provides the requesting trader with the ability to specify a bid/offer liquidity spread. Option 552 provides the requesting trader with an opportunity to submit an RFQ without establishing a direction of trade. This will allow the requesting trader to receive a bid price and an offer price from a market participant.

Minimum size field 554, time limit field 556, BOLS field 558, and minimum number of prices field 560 are fields that may be incorporated in RFQ preference field 544. The requesting trader may specify a minimum size for an instrument he or she is willing to buy or sell in field 554. By populating field 556, the requesting trader may specify a time limit as to how long his or her RFQ is open for receiving a quote from a market participant. If the requesting trader desires to specify a bid/offer liquidity spread (BOLS), the requesting trader can specify the BOLS value in field 558 and select option 550. Field 560, when populated, provides the requesting trader with an opportunity to specify the minimum number of quotes to receive from a market participant in response to his or her request.

OEDB 500 may also provide a trade preference field 532. preference field 532 may be used to indicate the trader's preferred trade type and may allow the requesting trader to select any type of trade that a particular exchange or trading system supports. Although FIG. 5 provides specific examples of trade types (e.g., good-till-canceled (GTC), limit, all-or-none (AON), stop, and market-if-touched (MIT)), the invention may be implemented with any type of trade.

The requesting trader may exercise a guarantee-to-trade (GTT) option in a 2-way RFQ market in which a price parameter and a BOLS parameter is provided. This is a trade type that does not currently exist in the marketplace. GTT may be, for example, an option provided in trade preferences field 532. The GTT status of the 2-way RFQ may be identified to the market participant in order to allow the market participant to be aware of how a trade will be executed if he or she meets the parameters set forth by the requesting trader.

OEDB 500 may also provide an auto-execution feature for an REQ. The auto-execution feature, when selected, may be used to automatically respond to a market participant's quote For example, if a quote satisfying the requesting trader's criteria for accepting the quote is received, an accept confirmation may be automatically transmitted from the requesting trader and the trade may be executed. other various features for managing quotes received in response to an RFQ may be incorporated into OEDB 500.

Options and fields provided in OEDB 500 may be reconfigured to suit any requesting trader's needs and preferences. Configure keypad option 536 may provide the requesting trader with the ability to reconfigure OEDB 500. Close-on-action box 534, when selected, may cause OEDB 500 to be automatically closed after specified actions are performed. Close option 538 allows the requesting trader to close OEDB 500 on demand. In addition, assignable issue buttons field 540 may be provided to allow the requesting trader to have a specific set of instructions executed by the push of a single button. Issue buttons in field 540 may be configured accordingly via assign buttons option 542.

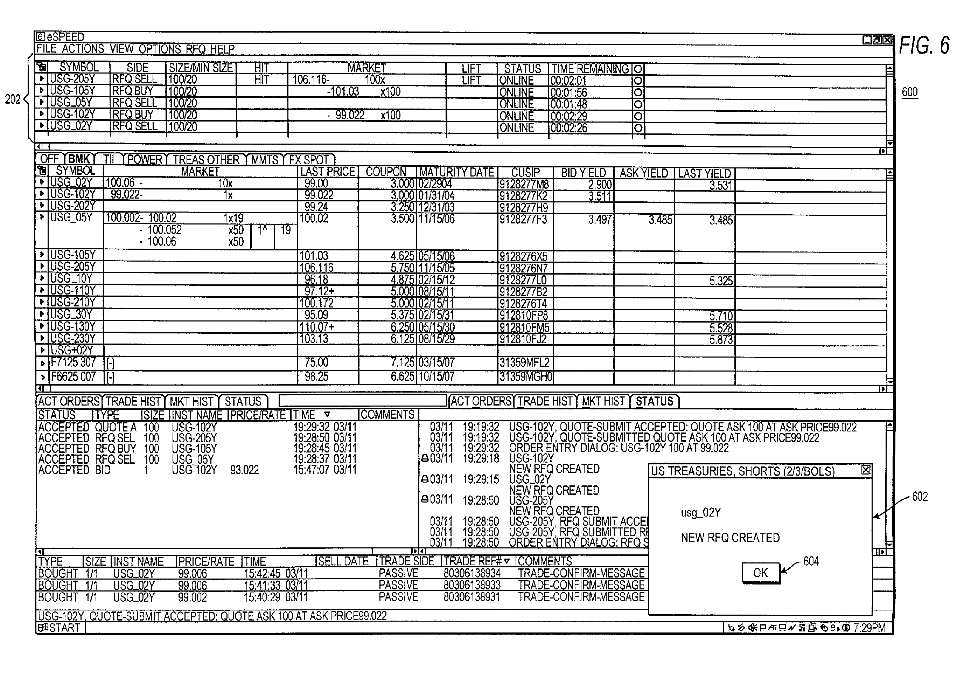

Once a requesting trader has submitted his or her RFQ, the RFQ is posted to a select group of market participants. Interface window 600 of FIG. 6 illustrates notification of a new RFQ. Notification window 602 may be displayed as an overlay on interface window 600. Window 602 identifies the new RFQ submitted by a requesting trader and informs the receiving market participant that a new RFQ has been posted to the market. In addition to receiving notification window 602 when a new RFQ has been posted, the new RFQ may be displayed in RFQ trading grid 202.

Notification of a new RFQ may be configured by a market participant. Instead of notification window 602, a market participant may configure his or her interface window 600 to provide other means of notification. For example, notification may be provided by a particular distinctive sound. Another method of notification may be provided by highlighting the new RFQ or providing a distinctive background for the new RFQ in grid 202 for a specified period of time.

Once a market participant has selected "OK" button 604 on notification window 602, the market participant may access the RFQ from grid 202. To place a quote on an RFQ posted in grid 202, the market participant may need to access OEDB 500 of FIG. 5. OEDB 500 may be provided when the market participant, for example, double clicks on an RFQ listed in grid 202. Once OEDB 500 is made available, the market participant may identify a price in field 528, a size in field 530, any other applicable attributes (e.g., a strike price), and select either bid option 512 or offer option 514 (based on whether the request being made is for selling or buying the instrument) to submit the quote to the requesting trader.

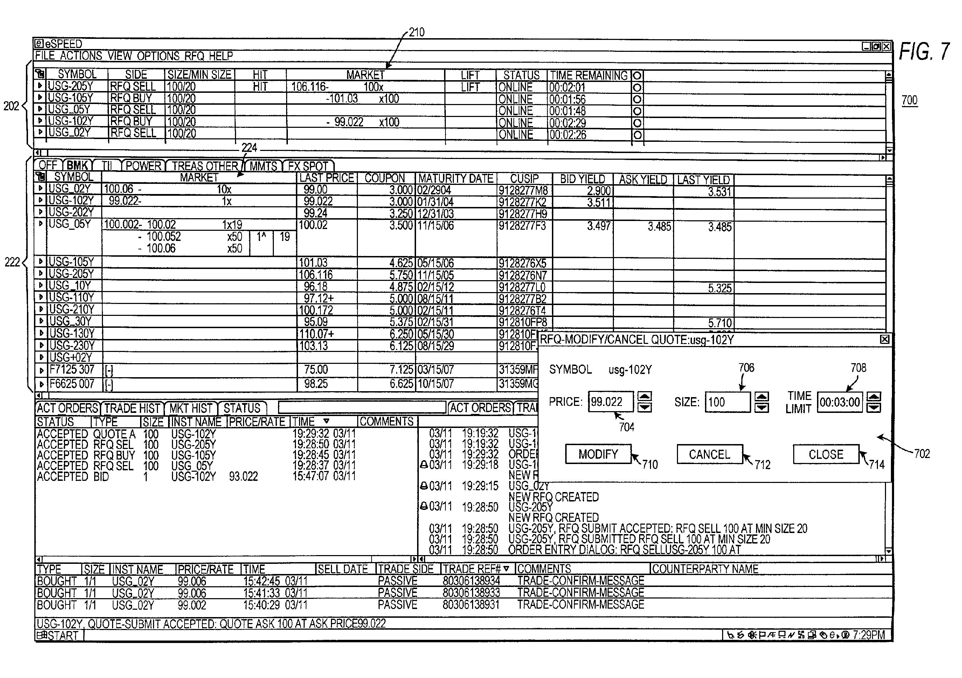

Interface window 700 of FIG.7 illustrates a market participant's quote to an RFQ. When the market participant submits his or her quote in response to the RFQ, the bid or offer price along with the bid or offer size may be displayed in the market participant's market field 210 of RFQ trading grid 202 and market field 224 of instrument grid 222. Similarly, the quote information submitted by the market participant may be displayed in the requesting trader's market field 210 of RFQ trading grid 202 and market field 224 of instrument grid 222 of FIG.2.

A market participant may be provided with an opportunity to modify or cancel a quote for an RFQ before a requesting trader has responded to the quote (e.g., by accepting or rejecting the quote). The market participant may select the RFQ from trading grid 202 that he or she wishes to modify or cancel. The market participant may double click on the desired RFQ to activate RFQ quote window 702. Window 702 may provide the market participant with price field 704, size field 706, and time limit field 708. In addition, window 702 may include modify option 710, cancel option 712, and close option 714.

When modifying a quote, the market participant may identify a new quote price (i.e., a bid price if the requesting trader is a seller or an offer price if the requesting trader is a buyer) for the RFQ in field 704. The market participant may also identify a new size for the instrument he or she is quoting a new price for in field 706. The market participant may also be provided with an opportunity to adjust the time limit for responding to the quote in field 708. Once the appropriate values have been populated in the appropriate fields of window 702, the market participant may select modify option 710 to submit the new quote. The market participant may also choose to cancel the entire quote by selecting cancel option 712, rather than modify the quote. Window 702 may be removed from interface window by selecting close option 714.

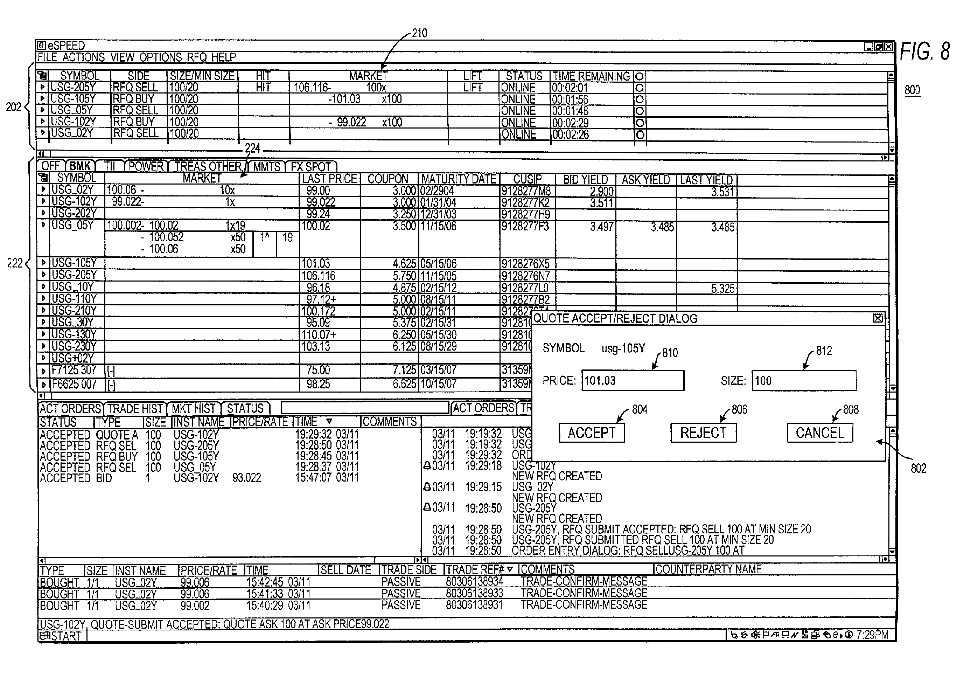

Interface Window 800 of FIG. 8 illustrates a requesting trader's response to a market participant's quote. After a requesting trader has received a quote from a market participant, the requesting trader may either accept the quote or reject the quote using quote accept/reject window 802. The requesting trader may, for example, double click on the bid or offer price posted in market field 210 of grid 202 or the bid or offer price posted in market field 224 of grid 222 to activate window 802. Similarly, the requesting trader may activate window 802 by double clicking on the posted size in market field 210 of grid 202 or the posted size in market field 224 of grid 222.

When window 802 is activated, the requesting trader may then select accept option 804 to accept the market participant's quote and execute the trade. The requesting trader may also have the option to reject the quote made by the market participant using reject option 806. A quote may be rejected with or without a counter-quote. If the requesting trader wishes to reject the quote without providing a counter-quote, the requesting trader may leave the quoted price in field 810 and the quoted size in field 812 unchanged and select option 806. However, if the requesting trader wishes to reject the quote and provide a counter-quote, the requesting trader may edit the quoted values in fields 810 and 812 and then select option 806.

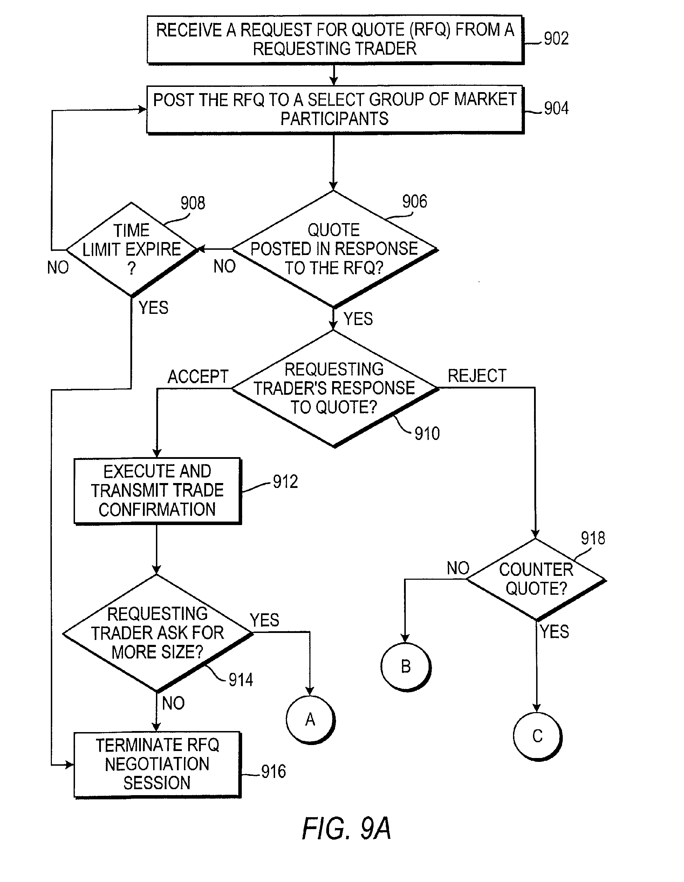

A process for negotiating a quote in response to an RFQ in accordance with the invention is shown in FIGS. 9A-9E. The response to an RFQ in the form of a quote may begin the negotiation process. The negotiation process may go back and forth between the requesting trader and the market participant providing the quote until a trade has been successfully executed or the negotiation session is terminated by one of the parties. An RFQ may initially be received from a requesting trader at step 902 and posted to a select group of market participants at step 904. The market participants may be pre-defined by the requesting trader, determined automatically by management facility 120, or a combination thereof.

At step 906, a check is made to determine if a quote has been issued by the market participant in response to the RFQ. If a quote has not been issued, then it must be determined, at step 908, whether a time limit associated with the RFQ has expired. If the time limit defined (e.g., in time limit field 556 of FIG. 5) has not expired , the RFQ may continue to be posted and made available for quoting by the market participants. However, if the time limit has expired at step 908, the negotiation session for the RFQ is terminated at step 916.

When a quote is posted in response to an RFQ within the allotted time constraints, the negotiation session progresses to step 910, at which point it is determined whether the requesting trader has responded to the market participant's quote. A requesting trader may elect to accept or reject the quote posted by the market participant. If the quote is accepted by the requesting trader, then the trade is executed for the instrument and a confirmation is transmitted to the negotiating parties at step 912.

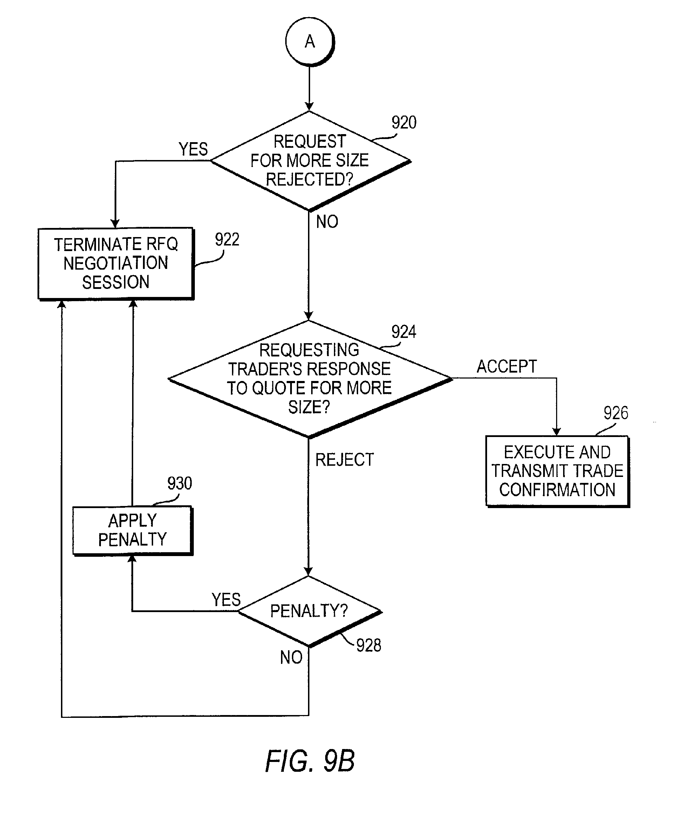

The requesting trader, after accepting the quote provided by the market participant, may be provided with an opportunity to continue further negotiations. At step 914, the requesting trader may ask for more size on the instrument that was just traded with the market participant. If the requesting trader does not request more of the instrument, the RFQ negotiation session may be terminated at step 916. If the requesting trader does request more of the traded instrument, then the negotiation process may progress to step 920 of FIG. 9B.

FIG. 9B illustrates the method by which a requesting trader may request more of an instrument that he or she initially executed a trade on. At step 920, it is determined whether the market participant has agreed to provide more of the instrument. If the market participant declines to provide more of the instrument, the RFQ negotiation session is terminated at step 922. If the market participant provides the requesting trader with more of the instrument, then the negotiation process may continue to step 924. At step 924, the requesting trader may choose to accept or reject the market participant's quote for more of the instrument. If the requesting trader accepts the quote, then the trade may be executed and confirmed at step 926. If the requesting trader rejects the quote, a penalty may be applied. A penalty may or may not exist based on the rules in effect with the particular market in which the instrument is being traded. A penalty may be determined to exist at step 928. If no penalty exists, the negotiation process may be terminated at step 922. If a penalty does exist, then the penalty may be applied at step 930 before the negotiation session is terminated at step 922.

Penalties may be applied in a negotiation session in order to deter unfair negotiation. Determination of the penalties to be applied may be regulated by the rules defined for a specific market. In order to appropriately execute penalties to punish unfair negotiation (according to rules for a specific marketplace), marketplace policing may be exercised in a negotiation session between a requesting trader and a market participant. Monitoring server 122 and control server 126 may be used to regulate and enforce such penalties.

Market policing may be exercised in accordance with marketplace rules and/or participant applied rules. Marketplace rules may be based on a concept of "3-strikes and your out". For example, a penalty may be applied to a requesting trader who continuously issues a request, receives a quote in response to the request from a market participant, and continuously rejects the quote or fails to offer a counter-quote. A penalty in response to such activity may be to restrict the requesting trader from submitting any requests for an extended period of time or until the requesting trader issues valid quotes against other quotes. Furthermore, ongoing penalties against either party in a negotiation session may lead to removal from a marketplace. Other marketplace rule-based penalties may be exercised in the negotiation process and the invention is not limited to any one penalty determination.

Participant applied rules may be enforced directly by a requesting trader or a market participant. Penalties applied according to these rules may be dependent on the current position of the party in the negotiation session. For example, a market participant making a quote in response to an RFQ may have the ability to apply a penalty should the requesting trader ignore the quote. As quotes and counter-quotes are provided, the ability to provide a penalty may be shifted back and forth to the party in the negotiation session with the outstanding quote. Practicing penalties according to this procedure may encourage parties in a negotiation session to either accept a quote or further the negotiation with a counter-quote. Participant rule-based penalties may allow the offended party in the negotiation session to, for example, disable receiving an RFQ from the offending party for a time period specified by the offended party. More severe penalties may be exercised by the offended party. For example, the offended party may disable receiving any RFQ from a party operating within the entity of the offending party.

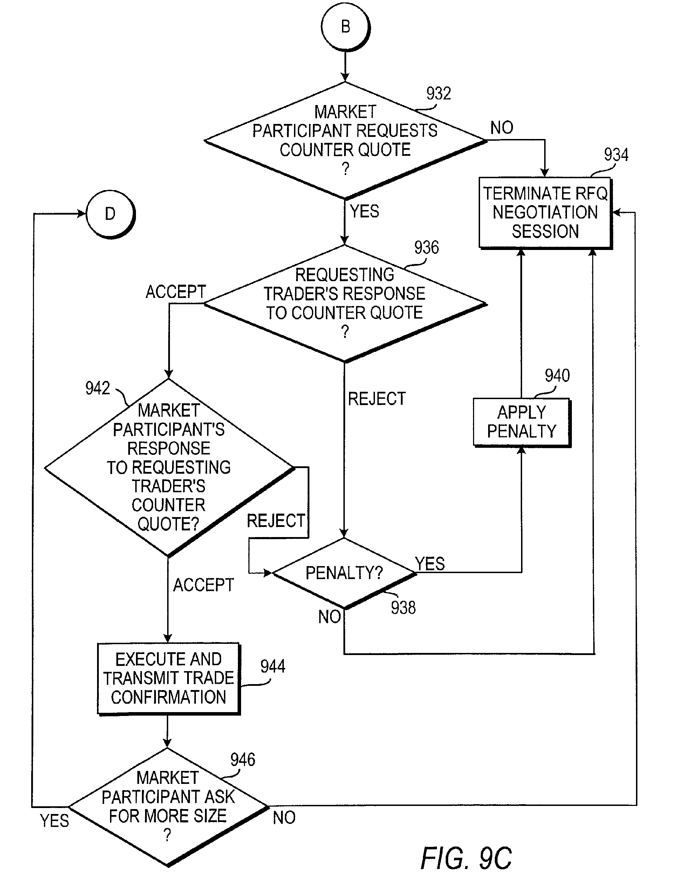

Referring back to FIG. 9A. if at step 910 the requesting trader initially rejects a market participant's quote, the negotiation process may then proceed to determine whether or not the requesting trader's rejection of the quote was issued with a counter-quote at step 918. If no counter-quote was issued with the rejection, the negotiation process may proceed to step 932 of FIG. 9C. A market participant may or may not make a request for a counter-quote at step 932. If no request is made for a counter-quote then the RFQ negotiation session is terminated at step 934.

If a request is made by the market participant, then the process may proceed to step 936 to determine whether the requesting trader has accepted to provide a counter-quote. If the requesting trader refuses to provide a counter-quote in response to the market participant's request, a penalty may be associated with the refusal. A penalty maybe determined to exist at step 938. If a penalty exists in this particular market being traded on, the penalty may be applied at step 940 and the REQ negotiation session may be terminated at step 934. If no penalty exists, the negotiation session may directly terminate at step 934.

If the requesting trader responds to the market participant's request for a counter-quote at step 936 (e.g., by using window 802 of FIG. 8), the negotiation process may then proceed to determine whether the market participant accepts or rejects the requesting trader's counter-quote. If the market participant rejects the counter-quote, a check may be made at step 938 for a penalty associated with the action. If the penalty exists, it may be applied at step 940 and the negotiation session is terminated at step 934. If no penalty exists, the session may directly terminate at step 934.

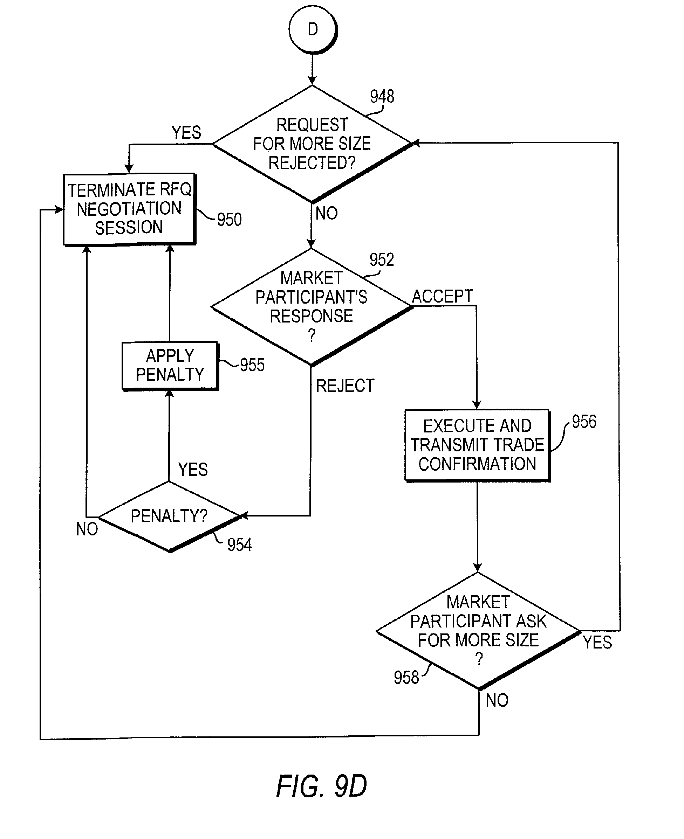

If the market participant accepts the requesting trader's counter-quote, the trade may be executed and confirmed at step 944. After the initial trade has been executed, the market participant may elect to ask for more size of the instrument to trade at step 946. If the market participant does not ask for more size, the negotiation session is terminated at step 934. If the market participant asks for more size, the negotiation process may proceed to step 948 of FIG. 9D.

At step 948 of FIG. 9D, the requesting trader may elect not to provide the market participant with more size of the instrument. In this case, the RFQ negotiation session may be terminated at step 950. If the requesting trader elects to provide more of the instrument then the negotiation process may proceed to step 952 where it may be determined where if the market participant has accepted or rejected the quote for more. If the market participant rejects the quote, a penalty may be determined to exist at step 954. If a penalty exists, it may be applied at step 955 and the negotiation session may be terminated at step 950. If no penalty exists, the negotiation session may directly be terminated at step 950.

If the market participant accepts the quote at step 952, the additional trade is executed and confirmed at step 956. The process may again determine, at step 958, if the market participant has asked for more size of the instrument to be traded. If not, the negotiation session may be terminated at step 950. However, if the market participant asks for more size, the process may proceed back to step 948 of FIG. 9D and run through all the conditions again.

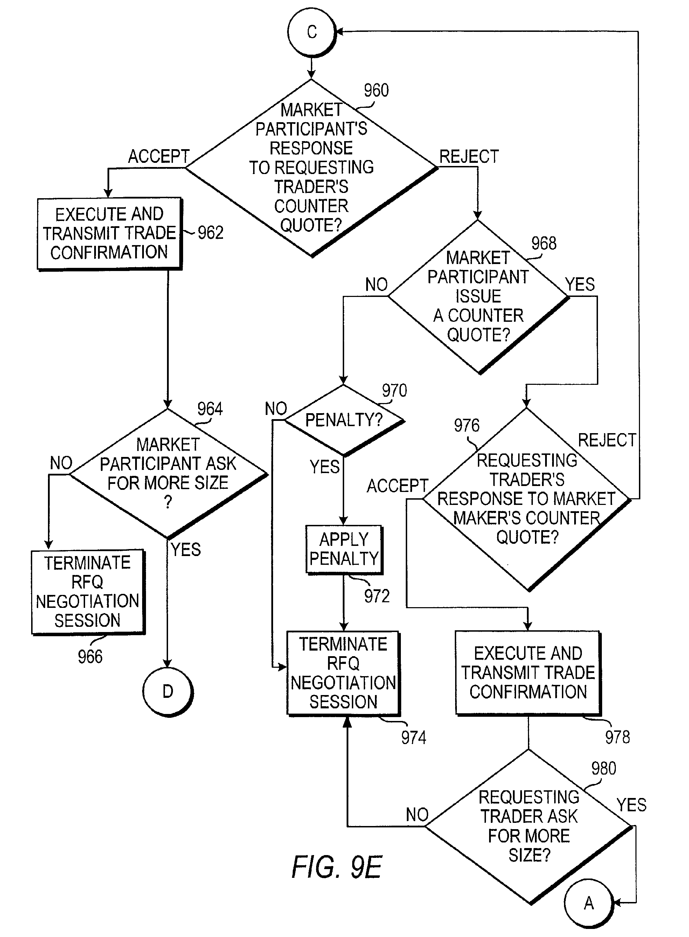

Returning again to FIG. 9A, a requesting trader may also elect to initially reject a market participant's quote, at step 910, and with the rejection provide a counter-quote (determined at step 918) absent a request from the market participant. If a counter-quote is provided, the negotiation process may proceed to step 960 of FIG. 9E. The market participant may elect to accept or reject the counter-quote. If the counter-quote is accepted, the trade may be executed and confirmed at step 962, Then it may be determined, at step 964, whether the market participant has requested more size of the instrument. If not, the RFQ negotiation session is terminated at step 966. If more size is requested, the negotiation process may again execute the conditions and steps in FIG. 9D.

If the requesting trader's counter-quote is rejected at step 960, the market participant may elect to issue his or her own counter-quote at step 968. If no counter-quote is provided, a penalty may be determined to exist at step 970, a penalty applied at step 972, and the negotiation session terminated at step 974. If no penalty exists, the negotiation session may be directly terminated at step 974.

A counter-quote provided by the market participant, at step 968, may then proceed to step 976. At step 976, the requesting trader's response to the market participant's counter-quote is determined. If the counter-quote is rejected, the process may begin again at step 960. If the requesting trader accepts the counter-quote, the trade is executed and confirmed at step 978. Upon completion of the initial trade, the requesting trader may ask for more size of the instrument at step 980. If no additional size is asked, the negotiation session is terminated at step 974. However, if additional size is asked for, the negotiation session may return to step 920 of FIG. 9B.

It should be obvious to one of ordinary skill in the art that the present invention may be practiced in embodiments other than Chose illustrated herein without departing from the spirit and scope of the present invention, and that the invention is only limited by the claims which follow.

## Claims

1. A method for rule-based bilateral negotiation of a quote using a user-interactive trading interface, the quote being a price quote for a traded instrument, the method comprising:
receiving a request for quote from a requesting trader;
posting said request for quote to at least one market participant;
receiving said price quote from said market participant;
initiating a rule-based negotiation session based on said requesting trader accepting said price quote; and
policing said rule-based negotiation session for inappropriate trading transactions.

2. The method defined in claim 1 wherein said user-interactive trading interface is configured to display a plurality of grids.

3. The method defined in claim 1 wherein said user-interactive trading interface is automatically configured based on a traded instrument's market.

4. The method defined in claim 1 wherein said user-interactive trading interface is configured by said requesting trader.

5. The method defined in claim 1 wherein said user-interactive trading interface is configured by said market participant.

6. The method defined in claim 2 wherein said grids are selected from the group consisting of a request for quote trading grid, an instrument grid, a trader information grid, and a confirmation grid.

7. The method defined in claim 6 wherein said request for quote trading grid provides a listing of all request for quotes available in a market to said requesting trader.

8. The method defined in claim 6 wherein said request for quote trading grid provides a listing of all request for quotes available in said market to said market participant.

9. The method defined in claim 6 wherein said instrument grid provides said traded instruments available in said market.

10. The method defined in claim 6 wherein said trader information grid provides individual information pertaining to requesting trader's request for quotes and responses to said request for quotes.

11. The method defined in claim 6 wherein said confirmation grid provides information pertaining to an executed trade.

12. The method defined in claim 1 wherein said requesting trader initiates said request for quote by selecting said traded instrument from said instrument grid.

13. The method defined in claim 12 wherein selecting said traded instrument from said instrument grid triggers an order entry dialog box.

14. The method defined in claim 13 wherein said order entry dialog box allows said requesting trader to specify parameters of said request for quote and submit said request for quote to be posted to said market participant.

15. The method defined in claim 1 further comprising said market participant receiving a notification of a request for quote being posted.

16. The method defined in claim 1 wherein said market participant responds to said request for quote with said price quote by selecting said request for quote from said instrument grid.

17. The method defined in claim 1 further comprising determining said rules to be applied in said negotiation session based on said traded instrument's market in which said request for quote is posted.

18. The method defined in claim 1 wherein said requesting trader accepting said price quote executes a trade for said traded instrument and is provided with an opportunity to make a request for more size of said traded instrument from said market participant.

19. A method for rule-based bilateral negotiation of a quote using a user-interactive trading interface, the quote being a price quote for a traded instrument, the method comprising:
receiving a request for quote from a requesting trader;
posting said request for quote to at least one market participant;
receiving said price quote from said market participant;
initiating a rule-based negotiation session based on said requesting trader rejecting said price quote and providing a counter-quote; and
policing said rule-based negotiation session for inappropriate trading transactions.

20. The method defined in claim 19 wherein said user-interactive trading interface is configured to display a plurality of grids.

21. The method defined in claim 19 wherein said user-interactive trading interface is automatically configured based on a traded instrument's market.

22. The method defined in claim 19 wherein said user-interactive trading interface is configured by said requesting trader.

23. The method defined in claim 19 wherein said user-interactive trading interface is configured by said market participant.

24. The method defined in claim 20 wherein said grids are selected from the group consisting of a request for quote trading grid, an instrument grid, a trader information grid, and a confirmation grid.

25. The method defined in claim 24 wherein said request for quote trading grid provides a listing of all request for quotes available in a market to said requesting trader.

26. The method defined in claim 24 wherein said request for quote trading grid provides a listing of all request for quotes available in said market to said market participant.

27. The method defined in claim 24 wherein said instrument grid provides said traded instruments available in said market.

28. The method defined in claim 24 wherein said trader information grid provides individual information pertaining to requesting trader's request for quotes and responses to said request for quotes.

29. The method defined in claim 24 wherein said confirmation grid provides information pertaining to an executed trade.

30. The method defined in claim 19 wherein said requesting trader initiates said request for quote by selecting said traded instrument from said instrument grid.

31. The method defined in claim 30 wherein selecting said traded instrument from said instrument grid triggers an order entry dialog box.

32. The method defined in claim 31 wherein said order entry dialog box allows said requesting trader to specify parameters of said request for quote and submit said request for quote to be posted to said market participant.

33. The method defined in claim 19 further comprising said market participant receiving a notification of a request for quote being posted.

34. The method defined in claim 19 wherein said market participant responds to said request for quote with said price quote by selecting said request for quote from said instrument grid.

35. The method defined in claim 19 further comprising determining said rules to be applied in said negotiation session based on said traded instrument's market in which said request for quote is posted.

36. The method defined in claim 19 wherein said requesting trader rejecting said price quote and providing said counter-quote is provided with an opportunity to execute a trade on said traded instrument based on said market participant accepting said counter-quote.

37. The method defined in claim 36 wherein said market participant is provided with an opportunity to issue a counter-quote in response to said counter-quote provided by said requesting trader.

38. A method for rule-based bilateral negotiation of a quote using a user-interactive trading interface, the quote being a price quote for a traded instrument, the method comprising:
receiving a request for quote from a requesting trader;
posting said request for quote to at least one market participant;
receiving said price quote from said market participant;
initiating a rule-based negotiation session based on said requesting trader rejecting said price quote without providing a counter-quote; and
policing said rule-based negotiation session for inappropriate trading transactions.

39. The method defined in claim 38 wherein said user-interactive trading interface is configured to display a plurality of grids.

40. The method defined in claim 38 wherein said user-interactive trading interface is automatically configured based on a traded instrument's market.

41. The method defined in claim 38 wherein said user-interactive trading interface is configured by said requesting trader.

42. The method defined in claim 38 wherein said user-interactive trading interface is configured by said market participant.

43. The method defined in claim 39 wherein said grids are selected from the group consisting of a request for quote trading grid, an instrument grid, a trader information grid, and a confirmation grid.

44. The method defined in claim 43 wherein said request for quote trading grid provides a listing of all request for quotes available in a market to said requesting trader.

45. The method defined in claim 43 wherein said request for quote trading grid provides a listing of all request for quotes available in said market to said market participant.

46. The method defined in claim 43 wherein said instrument grid provides said traded instruments available in said market.

47. The method defined in claim 43 wherein said trader information grid provides individual information pertaining to requesting trader's request for quotes and responses to said request for quotes.

48. The method defined in claim 43 wherein said confirmation grid provides information pertaining to an executed trade.

49. The method defined in claim 38 wherein said requesting trader initiates said request for quote by selecting said traded instrument from said instrument grid.

50. The method defined in claim 49 wherein selecting said traded instrument from said instrument grid triggers an order entry dialog box.

51. The method defined in claim 50 wherein said order entry dialog box allows said requesting trader to specify parameters of said request for quote and submit said request for quote to be posted to said market participant.

52. The method defined in claim 38 further comprising said market participant receiving a notification of a request for quote being posted.

53. The method defined in claim 38 wherein said market participant responds to said request for quote with said price quote by selecting said request for quote from said instrument grid.

54. The method defined in claim 38 further comprising determining said rules to be applied in said negotiation session based on said traded instrument's market in which said request for quote is posted.

55. The method defined in claim 38 wherein said requesting trader rejecting said price quote without providing said counter-quote provides said market participant with an opportunity to request a counter-quote from said requesting trader.

56. The method defined in claim 55 wherein said market participant is further provided with an opportunity to issue a counter-quote in response to said counter-quote from said requesting trader.

57. A method for market policing a rule-based bilateral negotiation of a quote, the quote being a price quote for a traded instrument, the method comprising:
determining rules associated with a request for quote;
monitoring said rule-based bilateral negotiation of said quote;
determining if a penalty is defined for an inappropriate trading transaction executed in said rule-based bilateral negotiation of said quote; and
applying said penalty for said inappropriate trading transaction.

58. The method defined in claim 57 wherein said determining rules associated with a request for quote is based on a market in which said request for quote is posted.

59. The method defined in claim 57 wherein said determining rules associated with a request for quote is based on a requesting trader's defined rules.

60. The method defined in claim 57 wherein said determining rules associated with a request for quote is based on a market participant's defined rules.

61. The method defined in claim 57 wherein said applying said penalty is regulated automatically by said market.

62. The method defined in claim 57 wherein said applying said penalty is regulated by said requesting trader when said requesting trader is awaiting a response to a quote.

63. The method defined in claim 57 wherein said applying said penalty is regulated by said market participant when said market participant is awaiting a response to a quote.

64. The method defined in claim 57 wherein said applying said penalty terminates said rule-based bilateral negotiation.

65. A method for distributing a request for quote, comprising:
determining rules for distributing said request for quote to a market participant; and
distributing said request for quote to at least one market participant.

66. The method defined in claim 65 wherein said market participant is selected from the group consisting of an individual, a plurality of individuals, a market group, a plurality of market groups, a submarket group within said market group, and a plurality of submarket groups within said market group.

67. The method defined in claim 65 wherein said rules for distributing said request for quote to a market participant are defined by criteria provided by a requesting trader.

68. The method defined in claim 65 wherein said rules for distributing said request for quote to a market participant are defined by grouping through permissions.

69. The method defined in claim 68 wherein said grouping through permissions provides at least one requesting trader to request a private session for a select group of market participants.

70. A system for rule-based bilateral negotiation of a quote using a user computer configured to provide a user-interactive trading interface, the quote being a price quote for a traded instrument, the system comprising:
said user computer configured to receive a request for quote from a requesting trader;
an electronic trade management facility configured to post said request for quote to at least one market participant;
said electronic trade management facility configured to receive said price quote from said market participant;
said electronic trade management facility configured to initiate a rule-based negotiation session based on said requesting trader accepting said price quote; and
said electronic trade management facility configured to police said rule-based negotiation session for inappropriate trading transactions.

71. The system defined in claim 70 wherein said user computer configured to provide said user-interactive trading interface is further configured to display a plurality of grids.

72. The system defined in claim 70 wherein said user computer configured to provide said user-interactive trading interface is further configured automatically based on a traded instrument's market.

73. The system defined in claim 70 wherein said user computer configured to provide said user-interactive trading interface is further configured by said requesting trader.

74. The system defined in claim 70 wherein said user computer configured to provide said user-interactive trading interface is further configured by said market participant.

75. The system defined in claim 71 wherein said grids are selected from the group consisting of a request for quote trading grid, an instrument grid, a trader information grid, and a confirmation grid.

76. The system defined in claim 75 wherein said request for quote trading grid provides a listing of all request for quotes available in a market to said requesting trader.

77. The system defined in claim 75 wherein said request for quote trading grid provides a listing of all request for quotes available in said market to said market participant.

78. The system defined in claim 75 wherein said instrument grid provides said traded instruments available in said market.

79. The system defined in claim 75 wherein said trader information grid provides individual information pertaining to requesting trader's request for quotes and responses to said request for quotes.

80. The system defined in claim 75 wherein said confirmation grid provides information pertaining to an executed trade.

81. The system defined in claim 70 wherein said requesting trader initiates said request for quote by selecting said traded instrument from said instrument grid.

82. The system defined in claim 81 wherein said user computer is further configured to provide an order entry dialog box when said traded instrument is selected, from said instrument grid.

83. The system defined in claim 82 wherein said order entry dialog box allows said requesting trader to specify parameters of said request for quote and submit said request for quote to be posted to said market participant.

84. The system defined in claim 70 wherein said user computer is further configured to receive a notification of a request for quote being posted.

85. The system defined in claim 70 wherein said market participant responds to said request for quote with said price quote by selecting said request for quote from said instrument grid.

86. The system defined in claim 70 wherein said electronic trade management facility is further configured to determine said rules to be applied in said negotiation session based on said traded instrument's market in which said request for quote is posted.

87. The system defined in claim 70 wherein said requesting trader accepting said price quote executes a trade for said traded instrument and is provided with an opportunity to make a request for more size of said traded instrument from said market participant.

88. A system for rule-based bilateral negotiation of a quote using a user computer configured to provide a user-interactive trading interface, the quote being a price quote for a traded instrument, the system comprising:
said user computer configured to receive a request for quote from a requesting trader;
an electronic trade management facility configured to post said request for quote to at least one market participant;
said electronic trade management facility configured to receive said price quote from said market participant;
said electronic trade management facility configured to initiate a rule-based negotiation session based on said requesting trader rejecting said price quote and providing a counter-quote; and
said electronic trade management facility configured to police said rule-based negotiation session for inappropriate trading transactions.

89. The system defined in claim 88 wherein said user computer configured to provide said user-interactive trading interface is further configured to display a plurality or grids.

90. The system defined in claim 88 wherein said user computer configured to provide said user-interactive trading interface is further configured automatically based on a traded instrument's market.

91. The system defined in claim 88 wherein said user computer configured to provide said user-interactive trading interface is further configured by said requesting trader.

92. The system defined in claim 88 wherein said user computer configured to provide said user-interactive trading interface is further configured by said market participant.

93. The system defined in claim 89 wherein said grids are selected from the group consisting of a request for quote trading grid, an instrument grid, a trader information grid, and a confirmation grid.

94. The system defined in claim 93 wherein said request for quote trading grid provides a listing of all request for quotes available in a market to said requesting trader.

95. The system defined in claim 93 wherein said request for quote trading grid provides a listing of all request for quotes available in said market to said market participant.

96. The system defined in claim 93 wherein said instrument grid provides said traded instruments available in said market.

97. The system defined in claim 93 wherein said trader information grid provides individual information pertaining to requesting trader's request for quotes and responses to said request for quotes.

98. The system defined in claim 93 wherein said confirmation grid provides information pertaining to an executed trade.

99. The system defined in claim 88 wherein said requesting trader initiates said request for quote by selecting said traded instrument from said instrument grid.

100. The system defined in claim 99 wherein said user computer is further configured to provide an order entry dialog box when said traded instrument is selected from said instrument grid.

101. The system defined in claim 100 wherein said order entry dialog box allows said requesting trader to specify parameters of said request for quote and submit said request for quote to be posted to said market participant.

102. The system defined in claim 88 wherein said user computer is further configured to receive a notification of a request for quote being posted.

103. The system defined in claim 88 wherein said market participant responds to said request for quote with said price quote by selecting said request for quote from said instrument grid.

104. The system defined in claim 88 wherein said electronic trade management facility is further configured to determine said rules to be applied in said negotiation session based on said traded instrument's market in which said request for quote is posted.

105. The system defined in claim 88 wherein said requesting trader rejecting said price quote and providing said counter-quote is provided with an opportunity to execute a trade on said traded instrument based on said market participant accepting said counter-quote.

106. The system defined in claim 105 wherein said market participant is provided with an opportunity to issue a counter-quote in response to said counter-quote provided by said requesting trader.

107. A system for rule-based bilateral negotiation of a quote using a user computer configured to provide a user-interactive trading interface, the quote being a price quote for a traded instrument, the system comprising:
said user computer configured to receive a request for quote from a, requesting trader;
an electronic trade management facility configured to post said request for quote to at least one market participant;
said electronic trade management facility configured to receive said price quote from said market participant;
said electronic trade management facility configured to initiate a rule-based negotiation session based on said requesting trader rejecting said price quote without providing a counter-quote; and
said electronic trade management facility configured to police said rule-based negotiation session for inappropriate trading transactions.

108. The system defined in claim 107 wherein said user computer configured to provide said user-interactive trading interface is further configured to display a plurality of grids.

109. The system defined in claim 107 wherein said user computer configured to provide said user-interactive trading interface is further configured automatically based on a traded instrument's market.

110. The system defined in claim 107 wherein said user computer configured to provide said user-interactive trading interface is further configured by said requesting trader.

111. The system defined in claim 107 wherein said user computer configured to provide said user-interactive trading interface is further configured by said market participant.

112. The system defined in claim 108 wherein said grids are selected from the group consisting of a request for quote trading grid, an instrument grid, a trader information grid, and a confirmation grid.

113. The system defined in claim 112 wherein said request for quote trading grid provides a listing of all request for quotes available in a market to said requesting trader.

114. The system defined in claim 112 wherein said request for quote trading grid provides a listing of all request for quotes available in said market to said market participant.

115. The system defined in claim 112 wherein said instrument grid provides said traded instruments available in said market.

116. The system defined in claim 112 wherein said trader information grid provides individual information pertaining to requesting trader's request for quotes and responses to said request for quotes.

117. The system defined in claim 112 wherein said confirmation grid provides information pertaining to an executed trade.

118. The system defined in claim 107 wherein said requesting trader initiates said request for quote by selecting said traded instrument from said instrument grid.

119. The system defined in claim 118 wherein said user computer is further configured to provide an order entry dialog box when said traded instrument is selected from said instrument grid.

120. The system defined in claim 119 wherein said order entry dialog box allows said requesting trader to specify parameters of said request for quote and submit said request for quote to be posted to said market participant.

121. The system defined in claim 107 wherein said user computer is further configured to receive a notification of a request for quote being posted.

122. The system defined in claim 107 wherein said market participant responds to said request for quote with said price quote by selecting said request for quote from said instrument grid.

123. The system defined in claim 107 wherein, said electronic trade management facility is further configured to determine said rules to be applied in said negotiation session based on said traded instrument's market in which said request for quote is posted.

124. The system defined in claim 107 wherein said requesting trader rejecting said price quote without providing said counter-quote provides said market participant with an opportunity to request a counter-quote.

125. The system defined in claim 124 wherein said market participant is further provided with an opportunity to issue a counter-quote in response to said counter-quote from said requesting trader.

126. A system for market policing a rule-based bilateral negotiation of a quote, the quote being a price quote for a traded instrument, the system comprising:
an electronic trade management facility configured to determine rules associated with a request for quote;
said electronic trade management facility configured to monitor said rule-based bilateral negotiation of said quote;
said electronic trade management facility configured to determine if a penalty is defined for an inappropriate trading transaction executed in said rule-based bilateral negotiation of said quote; and
said electronic trade management facility configured to apply said penalty for said inappropriate trading transaction.

127. The system defined in claim 126 wherein said electronic trade management facility configured to determine rules associated with a request for quote is further configured to determine rules based on a market in which said request for quote is posted.

128. The system defined in claim 126 wherein said electronic trade management facility configured to determine rules associated with a request for quote is further configured to determine rules based on a requesting trader's defined rules.

129. The system defined in claim 126 wherein said electronic trade management facility configured to determine rules associated with a request for quote is further configured to determine rules based on a market participant's defined rules.

130. The system defined in claim 126 wherein said electronic trade management facility configured to apply said penalty is further configured to allow said market to automatically regulate said penalty.

131. The system defined in claim 126 wherein said electronic trade management facility configured to apply said penalty is further configured to allow said requesting trader to regulate said penalty when said requesting trader is awaiting a response to a quote.

132. The system defined in claim 126 wherein said electronic trade management facility configured to apply said penalty is further configured to allow said market participant to regulate said penalty when said market participant is awaiting a response to a quote.

133. The system defined in claim 126 wherein said electronic trade management facility configured to apply said penalty is further configured to terminate said rule-based bilateral negotiation when said penalty is applied.

134. A system for distributing a request for quote, comprising;
an electronic trade management facility configured to determine rules for distributing said request for quote to a market participant; and
a routing server configured to distribute said request for quote to at least one market participant according to said rules.

135. The system defined in claim 134 wherein said market participant is selected from the group consisting of an individual, a plurality of individuals, a market group, a plurality of market groups, a submarket group within said market group, and a plurality of submarket groups within said market group.

136. The system defined in claim 134 wherein said rules for distributing said request for quote to a market participant are defined by criteria provided by a requesting trader.

137. The system defined in claim 134 wherein said rules for distributing said request for quote to a market participant are defined by grouping through permissions.

138. The system defined in claim 137 wherein said grouping through permissions provides at least one requesting trader with an ability to request a private session for a select group of market participants.
